# FASCICULE DE BREVET EUROPEEN

(11) **EP 0 531 570 B1**
(45) Date de publication et mention de la délivrance du brevet: **27.12.1995**
(21) Numéro de dépôt: 91115454.0
(22) Date de dépôt: 12.09.1991
(51) Int. Cl.: G01B 3/10

(54) **Mesure roulante avec dipositif de freinage**
Rollbandmass mit Aufwickelbremse
Tape-measure with braking device

(43) Date de publication de la demande: 17.03.1993
(73) Titulaire: SICFO-STANLEY Société industrielle et commerciale française des outils STANLEY, F-25009 Besançon (FR)
(72) Inventeur: Prouteau, Bernard, F-25320 Montferrand le Château (FR)
(74) Mandataire: Beetz & Partner Patentanwälte

(56) Documents cités:
- GB-A- 2 108 930
- GB-A- 2 114 094
- GB-A- 2 144 842

## Description

L'invention concerne une mesure roulante à rentrée automatique du ruban selon le préambule de la revendication 1. Une telle mesure est connue par exemple du brevet francais n° 76 09 869 (FR-A-2346677).

Ces mesures roulantes comprennent en général un ruban d'une longueur maximale de 10 mètres. Ces mesures dites courtes comportent normalement un ressort de rappel qui met le tambour d'enroulement en précontrainte pour assurer l'enroulement automatique du ruban dès qu'on le lâche entre les doigts ou bien dès qu'on relâche un dispositif de blocage prévu à cet effet. A ce moment-là le ressort de rappel commence à embobiner le ruban qui s'enroule de plus en plus vite. Ceci entraîne des dangers.

Il y a la possibilité de se couper les doigts au bord latéral du ruban qui est souvent fabriqué d'une lame d'acier à ressort très fine.

Un autre danger apparaît à la fin de course dudit ruban où la fixation du crochet d'extrémité de ruban peut rompre.

Pour remédier à ce problème plusieurs solutions ont déjà été apportées. Entre elles on peut citer notamment des régulateurs centrifuges, à bille, excentriques, etc. Ces régulateurs sont pour la plupart bien efficaces, ont néanmois le désavantage d' entraîner des pertes de temps en raison de la lenteur relative de rentrée du ruban dans le cas de mesurages intensifs.

Ces dispositifs sont en outre d'un coût relativement élevé et leur mécanisme est assez encombrant ce qui rend la taille du boîtier de la mesure moins compacte.

La présente invention se propose de remédier à ces inconvénients et a pour objet de présenter une mesure roulante avec un dispositif de freinage du ruban efficace d'une structure très simple et peu coûteuse.

Cet objet est atteint avec une mesure roulante suivant la revendication 1. Les revendications dépendantes visent des caractéristiques des modes de réalisation préférés.

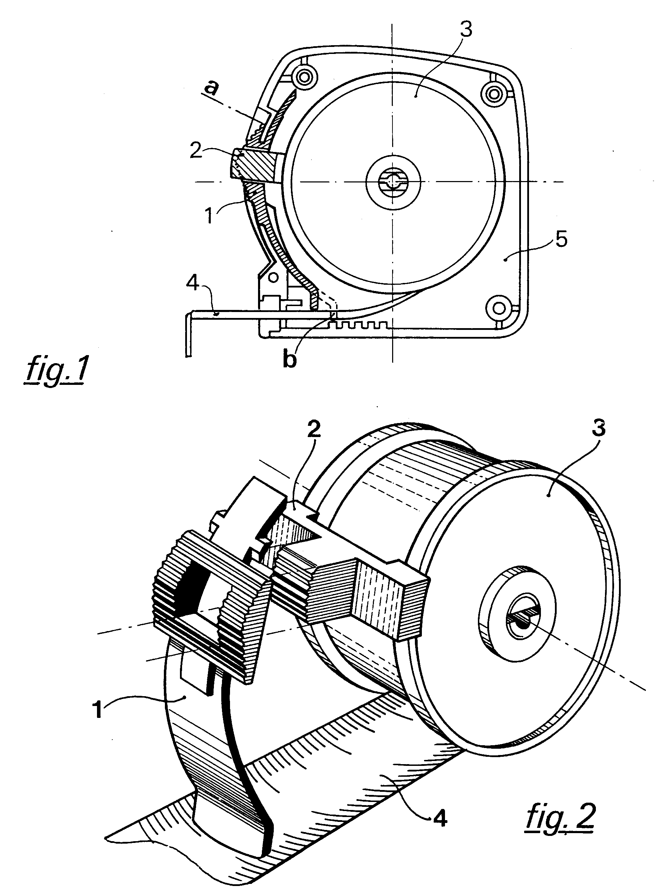

L'invention sera bien comprise en se référant à la description qui suit faite à titre d'exemple non limitatif avec référence aux dessins annexés dans lesquels la figure 1 est une coupe transversale du boîtier de la mesure et la figure 2 est une vue en perspective de l'ensemble du levier de blocage, du dispositif de frein et du tambour de ruban.

La mesure roulante se compose suivant la figure 1 d'un tambour 3 fixé sur un axe dans le boîtier 5. Sur le tambour 3 est enroulé le ruban 4 dont une extrémité sort d'une fente du boîtier en bas à droite dans la figure 1. Un levier de blocage 1 est déplacable entre une position haute (a) et une position bloquée du ruban (b) en pointillé. Ce levier de blocage sert à fixer le ruban dans une position bien définie et non pas de le freiner.

Un freinage par le levier de blocage sera au contraire néfaste, puisque l'extrémité du levier attaque sur la face supérieure du ruban, c'est-à-dire là où le ruban est laqué et/ou imprimé. Il y a alors un risque de gommer ou rayer les couches superficielles du ruban.

Le dispositif de freinage 2 attaque pour cette raison avec ses patins de freinage non pas le ruban même mais les bords latéraux du tambour 3, comme on voit clairement en figure 2.

Le dispositif de freinage comporte alors les deux patins et un bouton qui est guidé vers l'extérieur du boîtier en traversant le dispositif de blocage à la hauteur de son bouton de manipulation.

La section du trou et aussi la section du bouton sont rectangulaires ce qui sert de guidage de déplacement des patins de freinage et empêche une rotation du dispositif de freinage.

Le bouton du dispositif de freinage est donc accessible de l'extérieur et se trouve sous le pouce de l'utilisateur. Une pression modulée sur l'extrémité de ce tenon permet donc d'amener le frein 2 en contact avec les joues du tambour 3 et d'avoir aini un contrôle souple de la rentrée du ruban où son immobilisation si l'on maintient la pression. En outre, sans changer la position du pouce, une pression verticale de haut en bas permet d'entraîner l'ensemble levier de blocage 1 et frein 2 en position de blocage permanent.

Le dispositif suivant l'invention apporte alors un confort d'utilisation considérablement amélioré.

L'invention n'est pas limitée à la forme d'exécution qui vient d'être décrite et on peut bien entendu prévoir d'autres formes de réalisation couvertes par les revendications.

## Revendications

1. Mesure roulante à rentrée automatique du ruban (4) comportant
un boîtier (5) formé de préférence de deux coquilles et pourvu d'une fente de sortie dudit ruban de mesure (4) lequel est enroulé sur un tambour d'enroulement (3) relié à un ressort de rappel du ruban (4),
caractérisé par
un dispositif de freinage (2) du ruban (4) composé d'une pièce ayant une partie faisant office de bouton traversant une partie quelconque du boîtier (5) pour être accessible à l'extérieur et au moins un patin (2) freinant la rotation dudit tambour d'enroulement (3) par friction quand le bouton est actionné.

2. Mesure roulante selon la revendiation 1,
caractérisée par
un dispositif de blocage du ruban comprenant un levier de blocage (1) et en ce que le bouton poussoir du dispositif de freinage (2) traverse le levier de blocage (1) pour être accessible à l'extérieur du boîtier (5).

3. Mesure roulante selon l'une quelconque des revendications précédentes
caractérisée en ce que le bouton poussoir ainsi que le trou dans le levier de blocage (1) traversé par ce bouton sont d'une section rectangulaire correspondante assurant le guidage du mouvement du bouton poussoir.

## Claims

1. A measuring tape with automatic tape (4) return, comprising a casing (5) preferably formed from two halves and having an outlet slot for the measuring tape (4) which is wound on a drum (3) connected to a return spring for the tape (4), characterised by a braking device (2) for the tape (4), comprising a part which has a portion acting as a button extending through any part of the casing (5) so as to be accessible from the exterior and at least one shoe (2) which brakes the rotation of said drum (3) by friction when the button is actuated.

2. A measuring tape according to claim 1,
characterised by a tape locking device comprising a locking lever (1) and in that the push button for the braking device (2) extends through the locking lever (1) so as to be accessible from outside the casing (5).

3. A measuring tape according to claim 1 or 2,
characterised in that the push button and the hole in the locking lever (1) through which the button extends are of corresponding rectangular section to guide the movement of the push button.

## Patentansprüche

1. Rollbandmaß mit automatischem Einzug des Bandes (4), mit einem Gehäuse (5), das vorzugsweise aus zwei Schalen gebildet ist und mit einem Austrittsschlitz für das Maßband (4) versehen ist, welches auf einer Aufrolltrommel (3), die wiederum an einer Rückholfeder des Bandes (4) befestigt ist, aufgerollt ist,
gekennzeichnet durch
eine Bremsvorrichtung (2) des Bandes (4), die aus einem Teil zusammengesetzt ist, das einen Bereich aufweist, der als Betätigungsknopf dient und eine beliebige Stelle des Gehäuses (5) durchquert um von außen zugänglich zu sein und mindestens eine Kufe (2), die die Drehung der Aufrolltrommel (3) durch Reibung bremst, wenn der Knopf betätigt ist.

2. Rollbandmaß nach Anspruch 1, dadurch gekennzeichnet,
daß die Blockiervorrichtung des Bandes einen Blockierhebel (1) aufweist und dadurch, daß der Druckknopf der Bremsvorrichtung (2) den Blockierhebel (1) durchquert, um vom Äußeren des Gehäuses (5) zugänglich zu sein.

3. Rollbandmaß nach einem der vorstehenden Ansprüche, dadurch gekennzeichnet, daß der Druckknopf sowie die Öffnung in dem Blockierhebel (1), die durch den Knopf durchquert wird einen entsprechenden rechtwinkligen Querschnitt aufweisen um die Führung des Druckknopfs zu gewährleisten.
